# EUROPÄISCHE PATENTSCHRIFT

(11) **EP 3 323 549 B1**
(45) Veröffentlichungstag und Bekanntmachung des Hinweises auf die Patenterteilung: **07.01.2026**
(21) Anmeldenummer: 17189742.4
(22) Anmeldetag: 07.09.2017
(51) Int. Cl.: B23K 26/03, B23K 31/12

(54) **ÜBERWACHUNGSANORDNUNG FÜR EINE LASERANLAGE SOWIE LASERANLAGE MIT DER ÜBERWACHUNGSANORDNUNG**
MONITORING ASSEMBLY FOR A LASER SYSTEM AND LASER SYSTEM WITH THE MONITORING ASSEMBLY
DISPOSITIF DE SURVEILLANCE POUR UNE INSTALLATION LASER ET INSTALLATION LASER DOTÉE DU DISPOSITIF DE SURVEILLANCE

(30) Priorität: 21.11.2016 DE 102016122350
(43) Veröffentlichungstag der Anmeldung: 23.05.2018
(73) Patentinhaber: Erlas Erlanger Lasertechnik GmbH, 91056 Erlangen (DE)
(72) Erfinder: Hoffmann, Peter, 90425 Nürnberg (DE)
(74) Vertreter: Kanzlei Dr. Negendanck Patentmanufaktur

(56) Entgegenhaltungen:
- DE-A1- 102012 007 304
- DE-A1- 102012 207 835
- DE-A1- 102013 010 200
- DE-T2- 68 912 321
- US-B2- 9 114 477

## Beschreibung

Die Erfindung betrifft eine Überwachungsanordnung für eine Laseranlage, wobei die Laseranlage zur Umsetzung eines Laserbearbeitungsprozesses ausgebildet ist, mit den Merkmalen des Oberbegriffs des Anspruchs 1. Ferner betrifft die Erfindung eine Laseranlage mit der Überwachungsanordnung.

Bei der Lasermaterialbearbeitung wird ein fokussierter Laserstrahl auf ein Werkstück gerichtet, um dieses zum Beispiel zu schneiden oder zu schweißen. Wie jede Anlage in der industriellen Fertigung, müssen auch Laseranlagen allen Anforderungen der Arbeitssicherheit entsprechen.

Eine besondere Beachtung verdient dabei das Werkzeug Laserstrahl, da dieses bei den meisten Anwendungen eine Wellenlänge aufweist, die in einem für den Menschen unsichtbaren Bereich ist, sodass eine Gefährdung durch den Laserstrahl durch einen Bediener nicht erkannt werden kann. Üblicherweise sind Laseranlagen aus diesem Grund laserstrahldicht eingehaust, wobei die Einhausung so dimensioniert ist, dass auch ein längeres Auftreffen des Laserstrahls auf der Einhausung nicht zu einem Durchdringen der Einhausung führen kann. Beispielsweise sind derartige Einhausungen doppelwandig ausgeführt. Alternativ hierzu tragen die Einhausungen großflächige Sensoren, welche die durch den Laserstrahl eingebrachte Wärme erfassen, wobei die Laseranlage bei der Detektion des Laserstrahls ausgeschaltet wird.

Während der Lasermaterialbearbeitung ergeben sich charakteristische, optische Prozessemissionen, welche durch eine Wechselwirkung zwischen dem Laserstrahl und dem Material des Werkstücks hervorgerufen werden. Derartige Prozessemissionen werden eingesetzt, um den Laserbearbeitungsprozess zu

Die Druckschrift DE 100 60 176 A1 beschreibt einen Laserbearbeitungskopf mit einer integrierten Sensorik, wobei der Strahlengang der Sensorik koaxial zu dem Strahlengang des Laserstrahls zur Materialbearbeitung geführt ist. Der Sensor dient zur Überwachung des Bearbeitungsprozesses beim Laserstrahlschweißen.

Aus der DE 10 2012 007 304 A1 ist ein Verfahren zum Regeln einer Einschweißtiefe beim Verschweißen zweier Werkstücke bekannt.

Aus der DE 10 2012 207 835 A1 ist ein Verfahren zur Überwachung eines Laserbearbeitungsprozesses bekannt, wobei mindestens eine Bildaufnahmevorrichtung sowie eine zugehörige Auswerteeinheit vorgesehen sind.

Aus der DE 10 2013 010 200 A1 ist ein Verfahren bekannt zum präzisen Schneiden, Bohren, Ritzen und Kerben von Materialien sowie zur Entfernung dünner Schichten mit scharfen Kanten und genauer Tiefenkontrolle. Der Abstand zwischen Abbildungsoptik und Probe, der ein lokales Intensitätsminimum der laserinduzierten Plasma-Emission produziert, wird dafür als optimal ausgewählt. Das Verfahren berücksichtigt zudem Materialabhängigkeiten und kann somit sowohl zur Anpassung der Prozessparameter während der Bearbeitung, wie auch zur wunschgemäßen Abschaltung beim Laser-Mikroabtrag an Werkstücken, Bauteilen und Schichtsystemen verwendet werden, die aus mehreren Materialien bestehen.

Aus der DE 689 12 321 T2 ist eine Laserstrahl-Bearbeitungsvorrichtung bekannt zum Bearbeiten eines Werkstücks mit einem auf eine Fläche des Werkstücks einfallenden Laserstrahl mit: Reflexionslicht-Detektormitteln zum Erfassen eines Leistungspegels eines infolge einer Reflexion des Laserstrahls an der Werkstückoberfläche zurück zu einem Laseroszillator reflektierten Laserstrahls, und Anormalitäts-Detektormitteln zum Anhalten eines Betriebes des Laseroszillators und einer Bewegung des Werkstücks oder eines Blendenteils und für eine Alarmanzeige an einer Anzeigeeinrichtung, wenn der Leistungspegel des reflektierten Laserstrahls höher wird als ein vorbestimmter Wert, wobei der vorbestimmte Wert ein maximaler Ausgangswert ist, der für einen Bereich eines normalen Bearbeitungsbetriebes geschätzt ist.

Aus der US 9,114,477 B1, die den nächstliegenden Stand der Technik bildet, ist ein Verfahren und eine Vorrichtung bekannt zum Fügen von Werkstücken mittels eines Laserstrahls, wobei die Vorrichtung umfasst: eine Scanneroptik zum Führen des Laserstrahls; ein Presselement, das während des Fügevorgangs entlang einer Pressrichtung auf mindestens eines der Werkstücke gepresst wird; und ein Gehäuse, das die Scanneroptik und den von der Scanneroptik zu den Werkstücken verlaufenden Laserstrahl einhaust, wobei das Presselement einen Teil des Gehäuses bildet und relativ zum Rest des Gehäuses um mindestens einen Bewegungsfreiheitsgrad bewegbar ist .

Es ist Aufgabe der vorliegenden Erfindung, eine Überwachungsanordnung sowie eine Laseranlage mit der Überwachungsanordnung vorzuschlagen, welche weitere Funktionen bereitstellt. Diese Aufgabe wird durch eine Überwachungsanlage mit den Merkmalen des Anspruchs 1 sowie durch eine Laseranlage mit den Merkmalen des Anspruchs 3 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Überwachungsanordnung, welche für eine Laseranlage geeignet und/oder ausgebildet ist. Die Laseranlage ist zur Umsetzung eines Laserbearbeitungsprozesses ausgebildet. Die Laseranlage umfasst vorzugsweise mindestens einen Bearbeitungslaser zur Erzeugung eines Laserstrahls, insbesondere eines Bearbeitungslaserstrahls für den Laserbearbeitungsprozess. Der Bearbeitungslaser kann beispielsweise als ein Gaslaser oder als ein Festkörperlaser, insbesondere als ein CO₂-Laser oder als ein Nd:YAG-Laser ausgebildet sein. Vorzugsweise hat der Bearbeitungslaser eine Ausgangsleistung größer als 500 Watt, insbesondere größer als 1000 Watt. Vorzugsweise umfasst die Laseranlage eine Handhabungseinrichtung, wie z.B. einen Roboter. Bei dem Laserbearbeitungsprozess handelt es sich insbesondere um einen Schneidprozess, einen Schweißprozess, einen Härteprozess oder um einen Lötprozess In dem Laserbearbeitungsprozess wird ein Werkstück bearbeitet, wobei das Werkstück vorzugsweise aus Metall ist.

Die Überwachungsanordnung weist eine Auswerteeinrichtung auf. Die Auswerteeinrichtung kann als eine separate Auswerteeinrichtung ausgebildet sein. Alternativ hierzu ist die Auswerteeinrichtung als eine Komponente der Laseranlagensteuerung realisiert. Die Auswerteeinrichtung kann digital oder analog, hardwaretechnisch oder softwaretechnisch umgesetzt sein. Insbesondere ist die Auswerteeinrichtung als ein Computer realisiert.

Die Auswerteeinrichtung weist eine Eingangsschnittstelle zur signaltechnischen Übernahme von mindestens einem Sensorsignal auf. Die Eingangsschnittstelle kann kabelgebunden oder kabellos ausgebildet sein. Das Sensorsignal kann analog oder digital übergeben werden. Es ist auch möglich, dass das Sensorsignal als ein vorverarbeitetes Sensorsignal ausgebildet ist. Das Sensorsignal beschreibt eine Lichtemission in Form einer Prozessemission des Laserbearbeitungsprozesses. Das Sensorsignal wird durch eine Sensoreinrichtung aufgenommen, welche mit dem Erfassungsbereich auf den Laserbearbeitungsprozess gerichtet ist und ausgebildet ist, Lichtemissionen in Form von Prozessemissionen des Laserbearbeitungsprozesses hinsichtlich der Wellenlänge aufnehmen zu können.

Ferner weist die Auswerteeinrichtung eine Ausgangsschnittstelle zur Ausgabe eines Notsignals zur Einleitung einer Notreaktion für die Laseranlage auf. Die Ausgangsschnittstelle kann kabellos oder kabelgebunden sein. Das Notsignal kann als ein analoges oder digitales Signal ausgebildet sein. Die Notreaktion führt erfindungsgemäß zu einer Deaktivierung des Laserstrahls in dem Laserbearbeitungsprozess.

Im Rahmen der Erfindung wird vorgeschlagen, dass die Auswerteeinrichtung ausgebildet ist, das Sensorsignal auf Abweichungen in dem Laserbearbeitungsprozess, insbesondere in dem Verlauf des Laserbearbeitungsprozesses, zu untersuchen. Beispielsweise kann das Sensorsignal mit einem Referenzsensorsignal verglichen werden. Alternativ hierzu kann geprüft werden, ob das Sensorsignal zwischen bestimmten Grenzwerten verläuft oder diese überschreitet. Die Auswerteeinrichtung ist ferner ausgebildet, bei einer Detektion einer derartigen Abweichung die Ausgabe des Notsignals anzusteuern.

Erfindungsgemäß wird durch die Detektion von Lichtemissionen in Form von Prozessemissionen des Laserbearbeitungsprozess detektiert, ob der Laserstrahl bestimmungsgemäß das Werkstück trifft oder ob der Laserstrahl aufgrund einer Störung, wie z.B. einer Dejustage, einer Kollision der Handhabungseinrichtung, eines Fehlens eines Werkstücks, der Wahl eines falschen Bearbeitungsprogramms oder auf Basis von anderen Fehlern, nicht bestimmungsgemäß auf das Werkstück geleitet wird.

Abschätzungen haben beispielsweise ergeben, dass für einen Kilowatt-Laser eine Intensität der Lichtemission aufgrund eines beim Laserbearbeitungsprozesses entstehenden Plasmas im Brennfleck des Laserstrahls auf dem Werkstück von ca. 14 kW/mm² vorliegt. Schon bei einer Abstandsvergrößerung von 30 cm bricht dieser Wert auf ca. 8 kW/mm² ein. Somit ist ein deutlicher Unterschied in der Lichtemission zu erkennen und folglich eine deutliche Abweichung in dem Sensorsignal zu detektieren, sodass eine derartige Dejustage als möglicher Fehler in einfacher und sehr verlässlicher Weise über das Sensorsignal detektiert werden kann. Ändert sich somit das Sensorsignal in beschriebener Weise sehr stark, so kann von einer Dejustage des Laserstrahls relativ zu dem Werkstück ausgegangen werden und ein Notsignal angesteuert werden.

Optional ergänzend wird der Überwachungsanordnung ein weiteres Sensorsignal oder Leistungsüberwachungssignal zugeführt, welches anzeigt, wenn der Bearbeitungslaser aktiviert ist. So kann die Überwachungsanordnung feststellen, ob (1) der Bearbeitungslaser aktiviert ist und (2) ein dem Laserbearbeitungsprozess entsprechendes Sensorsignal auf Basis der Lichtemission des Laserbearbeitungsprozesses vorliegt. Für den Fall, dass die zweite Bedingung nicht vorliegt, kann das Notsignal zur Einleitung der Notreaktion für die Laseranlage ausgegeben werden.

Prinzipiell ist es möglich, dass das Sensorsignal eine Lichtemission des Laserbearbeitungsprozesses auf Basis eines erhitzten Werkstoffes des Werkstücks, insbesondere einer thermischen Strahlung beschreibt. Es ist jedoch bevorzugt, dass das Sensorsignal eine Lichtemission ausgehend von einem Laserplasma beschreibt. Das Laserplasma emittiert im Gegensatz zu der thermischen Strahlung einen größeren Anteil an UV-Strahlung, sodass ein Ausbleiben des Laserplasmas besonders genau durch das Sensorsignal erfasst werden kann.

Das Sensorsignal beschreibt ein Spektrum und/oder eine Intensität eines Plasmas bei dem Laserbearbeitungsprozess. Hinsichtlich des Spektrums kann ein vollständiges Spektrum, beispielsweise über ein Spektrometer, erfasst werden. Es kann jedoch ausreichend sein, mindestens zwei Stützpunkte, welche bei unterschiedlichen Wellenlängen oder Wellenlängenbereichen angeordnet sind, zu erfassen und beispielsweise mittels Quotientenbildung in Relation zu setzen.

Die Abweichung ist unter anderem als eine Abschwächung oder als ein Ausfall der Lichtemission ausgebildet. Dieses tritt genau dann auf, wenn der Laserstrahl dejustiert ist oder das Werkstück nicht trifft. In beiden Fällen ist von einem nicht planungsgemäßen Laserbearbeitungsprozess auszugehen und die Auswerteeinrichtung gibt das Notsignal zur Einleitung der Notreaktion auf.

Bei einer bevorzugten Weiterbildung der Erfindung weist die Überwachungsanordnung eine Blendeneinrichtung für eine Abblendung des Laserstrahls auf. Die Blendeneinrichtung kann in die Laseranlage integriert werden, sodass der Laserbearbeitungsstrahl durch die Blendeneinrichtung abgeblendet bzw. abgeschottet werden kann. Die Blendeneinrichtung ist mit der Auswerteeinrichtung signaltechnisch verbunden. Vorzugsweise erfolgt die Verbindung unter Ausschluss der Steuerung der Laseranlage. Durch das Notsignal wird die Blendeneinrichtung angesteuert, sodass der Laserstrahl abgeblendet oder unterbrochen wird. Der Vorteil der Blendeneinrichtung liegt als zusätzliche Komponente darin, dass diese unverzüglich angesteuert werden kann, sodass der Laserstrahl bei einer detektierten Abweichung sehr schnell, insbesondere in einer Zeit kleiner als 0,5 Sekunden, im Speziellen kleiner als 0,1 Sekunden abgeblendet und damit deaktiviert werden kann.

Ein weiterer Gegenstand der Erfindung betrifft eine Laseranlage, wie diese zuvor beschrieben wurde, zur Umsetzung des Laserbearbeitungsprozesses, wobei die Laseranlage eine Überwachungsanordnung aufweist, wie diese zuvor beschrieben wurde bzw. nach einem der vorhergehenden Ansprüche. Die Laseranlage, und die Überwachungsanordnung weist eine Sensoreinrichtung zur Aufnahme der Lichtemission des Laserbearbeitungsprozesses und zur Ausgabe des Sensorsignals auf.

Die Sensoreinrichtung weist eine Erfassungsrichtung auf, wobei die Erfassungsrichtung vorzugsweise koaxial zu dem Laserstrahl ausgerichtet ist. Insbesondere ist die Sensoreinrichtung als eine koaxiale Sensoreinrichtung ausgebildet. Damit blickt die Sensoreinrichtung in die gleiche Richtung wie der Laserbearbeitungsstrahl, sodass etwaig auftretende Lichtemissionen, insbesondere Prozessemissionen, des Laserbearbeitungsprozesses sicher erfasst werden. Beispielsweise ist die Sensoreinrichtung in einem Laserbearbeitungskopf integriert. In Abhängigkeit des Bearbeitungslasers kann beispielsweise ein Auskoppelspiegel oder eine Bohrung zur Auskopplung der Lichtemissionen des Laserbearbeitungsprozesses aus dem Strahlengang vorgesehen sein.

Für den Fall, dass die Lichtemission von einem Plasma stammt, ist es bevorzugt, dass die Sensoreinrichtung zur Erfassung von Lichtstrahlung mit einer Wellenlänge in dem UV-Bereich, also insbesondere kleiner als 350 nm ausgebildet ist. Alternativ hierzu kann die Sensoreinrichtung als ein Quotientensensor ausgebildet sein, welcher Lichtstrahlung in zwei unterschiedlichen Wellenlängenbereichen erfasst und die erfassten Werte in Relation setzt.

Es ist bevorzugt vorgesehen, dass die Laseranlage eine Notauseinrichtung aufweist, wobei die Notauseinrichtung mit der Auswerteeinrichtung signaltechnisch verbunden ist, wobei die Notauseinrichtung durch das Notsignal angesteuert wird, sodass die Laseranlage einen Notauszustand einnimmt. Insbesondere wird bei dem Notauszustand der Bearbeitungslaser abgeschaltet oder deaktiviert. Besonders bevorzugt nimmt die Laseranlage zugleich einen Nothalt ein, wobei die Handhabungseinrichtung gestoppt wird.

Bei einer vorteilhaften Weiterbildung der Erfindung ist vorgesehen, dass die Notauseinrichtung zwingend manuell, insbesondere von einem Bediener, aus dem Notauszustand in den Betriebszustand gesetzt werden muss. Dies stellt sicher, dass sich die Laseranlage nicht selbsttätig wieder aktivieren und gegebenenfalls nach einem Bearbeitungsfehler weiterlaufen kann, sondern erst durch einen Bediener geprüft wird.

Besonders bevorzugt weist die Laseranlage eine Arbeitszelleneinhausung zur Umgebung des Laserbearbeitungsprozesses auf. Die Arbeitszelleneinhausung ist insbesondere als eine Leichteinhausung ausgebildet, welche den gängigen Laserschutzvorschriften nicht vollständig entspricht. Die Möglichkeit, die Arbeitszelleneinhausung leistungsschwächer zu dimensionieren, ergibt sich durch die Überwachungsanordnung, welche die Arbeitszelleneinhausung hinsichtlich der Lasersicherheit ersetzt bzw. ergänzt.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigt:
Figur 1 in einer stark schematisierten Darstellung eine Laseranlage mit einer Überwachungsanordnung in einem Betriebszustand als ein erstes Ausführungsbeispiel der Erfindung,
Figur 2 die Laseranlage in Figur 1 in gleicher Darstellung in einem Notauszustand.

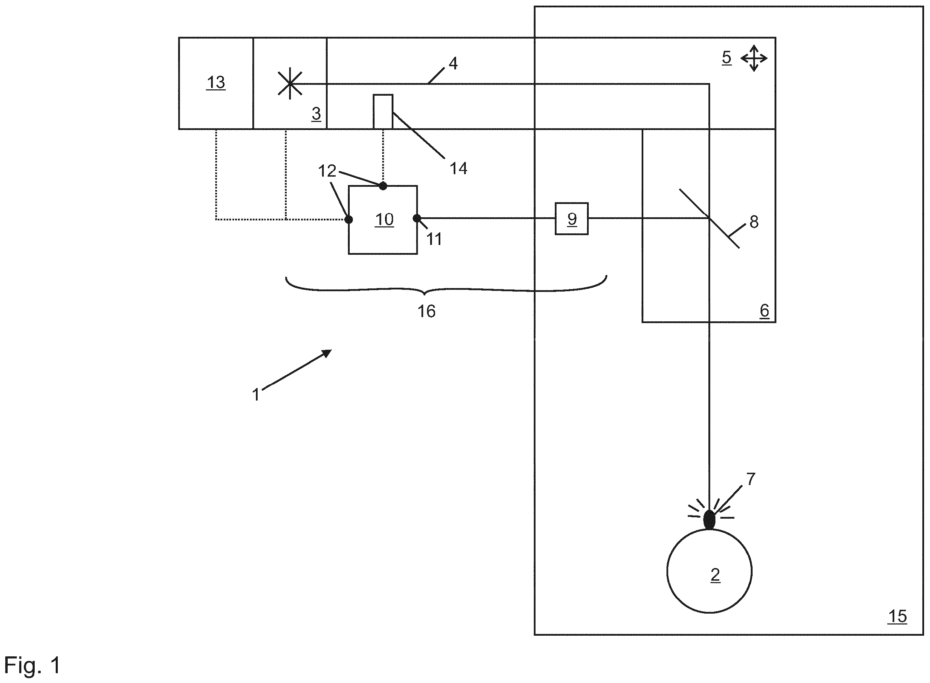

Die Figur 1 zeigt in einer stark schematisierten Darstellung eine Laseranlage 1 als ein Ausführungsbeispiel der Erfindung. Die Laseranlage 1 dient dazu, einen Laserbearbeitungsprozess an einem Werkstück 2 durchzuführen.

Die Laseranlage 1 weist einen Bearbeitungslaser 3 zur Erzeugung eines Laserstrahls 4 zur Bearbeitung des Werkstücks 2 auf. Der Laserstrahl 2 wird von dem Bearbeitungslaser 3 über eine Handhabungseinrichtung 5 geführt. Die Handhabungseinrichtung kann beispielsweise als ein Roboter, insbesondere als ein kartesischer Roboter oder als ein Knickarmroboter, ausgebildet sein, welcher eine Strahlführung für den Laserstrahl 4 trägt. Der Laserstrahl 4 wird über die Handhabungseinrichtung 5 zu einem Bearbeitungskopf 6 geführt, tritt dort aus und erreicht das Werkstück 2. Das Werkstück 2 ist z.B. aus Metall.

Die Laseranlage 1 weist zudem eine Überwachungsanordnung 16 mit mehreren Komponenten auf, die in der Laseranlage 1 teilweise integriert sind.

Aufgrund des Laserbearbeitungsprozesses entsteht auf dem Werkstück 2 ein Plasma 7. Das Plasma 7 strahlt eine Lichtemission aus, welche zumindest teilweise im UV-Bereich liegt. In dem Bearbeitungskopf 6 ist ein Auskoppelspiegel 8 angeordnet, welcher die Lichtemission von dem Plasma 7 entgegen der Ausbreitungsrichtung des Laserstrahls 4 auskoppelt und zu einer Sensoreinrichtung 9 führt. Die Sensoreinrichtung 9 bildet eine erste mögliche Komponente der Überwachungsanordnung 16. Der Auskoppelspiegel 8 und die Sensoreinrichtung 9 können so arrangiert sein, wie dies in der Figur 1 angedeutet ist. Es ist jedoch auch möglich, dass der Auskoppelspiegel 8 näher an dem Bearbeitungslaser 3 sitzt. Es ist jedoch vorteilhaft, wenn die Beobachtung des Bearbeitungsortes und/oder des Laserbearbeitungsprozesses und/oder des Plasmas 7 koaxial zu dem Laserstrahl 4 erfolgt. Die Beobachtungsrichtung der Sensoreinrichtung 9 ist koaxial zu dem Laserstrahl 4 ausgerichtet.

Die Sensoreinrichtung 9 erzeugt ein Sensorsignal, welches zu einer Auswerteinrichtung 10 weitergeleitet und dort verarbeitet wird. Die Auswerteeinrichtung 10 ist eine Schlüsselkomponente der Überwachungsanordnung 16. Die Auswerteeinrichtung 10 nimmt das Sensorsignal über eine Eingangsschnittstelle 11 auf. Die Auswerteeinrichtung 10 weist mindestens eine, vorzugsweise mehrere Ausgangsschnittstellen 12 auf, welche die Möglichkeit haben, ein Notaussignal oder ein Steuersignal zur Erzeugung eines Notaus auszugeben. Es ist dabei möglich, dass das Notaussignal zu einer Notauseinrichtung 17 einer Steuerung 13 der Laseranlage 1 geführt wird, sodass zentral ein Notaus durchgeführt wird. Es ist jedoch auch möglich, dass das Notaussignal zu dem Bearbeitungslaser 3 geführt wird, so dass dieser abgeschaltet wird. Eine weitere Möglichkeit sieht vor, dass das Notaussignal zu einer Blendeneinrichtung 14 geführt wird, welche den Strahlengang des Laserstrahls 4 abdecken und auf diese Weise den Laserstrahl 4 deaktivieren kann. Die Blendeneinrichtung 14 bildet eine weitere mögliche Komponente der Überwachungsanordnung 16.

Bei einem störungsfreien Betrieb der Laseranlage 1 ist der Laserstrahl 4 stets auf das Werkstück 2 gerichtet oder deaktiviert. Es ist jedoch im Betrieb nicht auszuschließen, dass der Laserstrahl 4 das Werkstück 2 nicht trifft, sei es, weil die Handhabungseinrichtung 5 deaktiviert ist, das Werkstück 2 fehlt, ein falsches Programm zur Bearbeitung gewählt wurde etc. Prinzipiell sind derartige Störfälle zwar mehrfach abgesichert, die Lasersicherheit schreibt jedoch vor, dass der Risikofall eines frei austretenden Laserstrahls 4 abgefangen sein muss.

Wie bereits erläutert, entstehen bei der Bearbeitung des Werkstücks 2 aufgrund des Plasmas 7 Prozessemissionen, insbesondere die Lichtemissionen. Bei Beispielrechnungen wurde festgestellt, dass bei einer Dejustage zwischen Bearbeitungskopf 6 und Werkstück 2 eine deutliche Änderung der Intensität der Lichtemission, welche in dem Bearbeitungskopf 6 zurückgestrahlt und über den Auskoppelspiegel 8 ausgekoppelt wird und danach auf die Sensoreinrichtung 9 fällt, gegeben ist.

Die Auswerteeinrichtung 10 überwacht, ob in dem Sensorsignal der Sensoreinrichtung 9 Abweichungen auftreten, welche auf eine Störung im Laserbearbeitungsprozess zurückzuführen sind. Derartige Abweichungen sind im vorliegenden Ausführungsbeispiel der Erfindung eine deutliche Reduktion der Intensität der erfassten Lichtemission oder eine Änderung der Spektralverteilung der erfassten Lichtemission. Die Auswerteeinrichtung 10 ist somit ausgebildet, das Sensorsignal auf Abweichungen in dem Laserbearbeitungsprozess zu untersuchen und bei Abweichungen über die Ausgangsschnittstelle 12 ein Notaus an die Laseranlage 1 und insbesondere an die Notauseinrichtung 17 zu übergeben.

Die Notausfunktionalität ist dabei so ausgebildet, dass der Notaus ausschließlich manuell zurückgesetzt werden kann, sodass die Laseranlage 1 sich nicht wieder selbsttätig in den aktiven Zustand zurücksetzen kann.

Die Laseranlage 1 weist ferner eine Arbeitszelleneinhausung 15 auf, welche den Bearbeitungsraum, in dem der freie Laserstrahl 4 angeordnet ist oder verläuft, gegenüber einer Umgebung abschirmt.

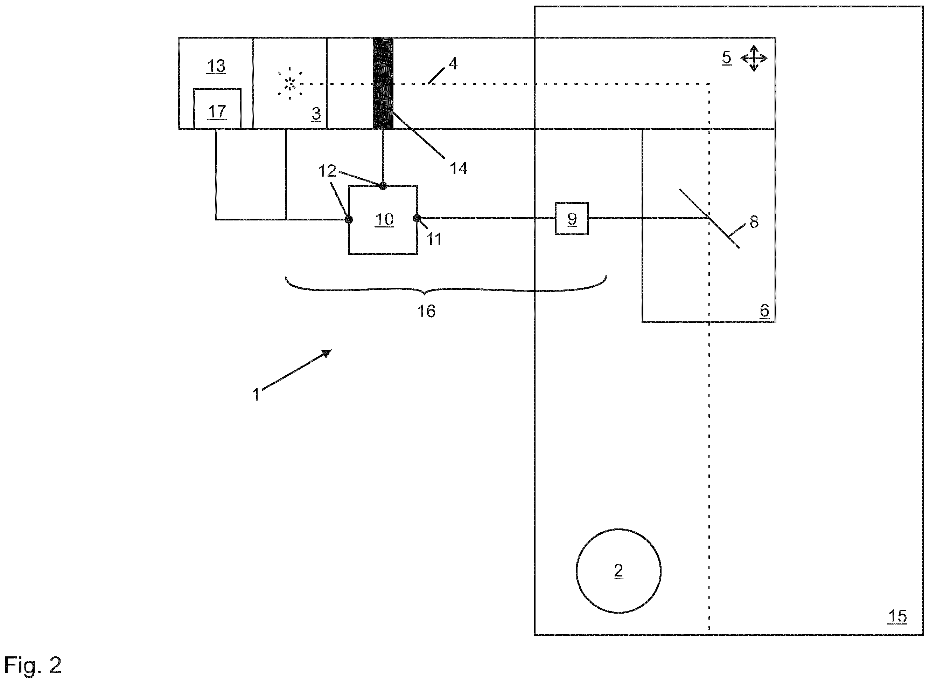

In der Figur 2 ist die Laseranlage 1 der Figur 1 gezeigt, wobei das Werkstück 2 in der Lage derart abweicht, dass der Laserstrahl 4 gegen eine Wand der Arbeitszelleneinhausung 15 strahlt. Mit dem Deplatzieren des Werkstücks 2 entfällt sofort das Plasma 7 und die Lichtemission erlischt. Diese Änderung der Lichtemission kann durch die Sensoreinrichtung 9 erfasst und von der Auswerteeinrichtung 10 detektiert werden. Eine derartige Änderung ist eine deutliche Abweichung gegenüber dem normalen Sensorsignalverlauf. Als Reaktion auf die Abweichung gibt die Auswerteeinrichtung 10 eine oder mehrere Notaussignale aus. So wird zum einen über die Steuerung 13 die Laseranlage 1 vollständig deaktiviert, ferner kann alternativ oder ergänzend der Bearbeitungslaser 3 deaktiviert werden. Eine weitere Möglichkeit ist, dass die Auswerteeinrichtung 10 unmittelbar auf die Blendeneinrichtung 14 steuernd einwirkt, sodass diese geschlossen wird und der Lichtweg des Laserstrahls 4 durch die Blendeneinrichtung 14 unpassierbar gemacht wird.

Mit dieser Funktionalität kann die Lasersicherheit für die Laseranlage 1 über die Überwachungsanordnung 16 erreicht werden, sodass die Arbeitszelleneinhausung 15 in Leichtbauweise ausgeführt werden kann.

### Bezugszeichenliste:

- 1: Laseranlage
- 2: Werkstück
- 3: Bearbeitungslaser
- 4: Laserstrahl
- 5: Handhabungseinrichtung
- 6: Bearbeitungskopf
- 7: Plasma
- 8: Auskoppelspiegel
- 9: Sensoreinrichtung
- 10: Auswerteeinrichtung
- 11: Eingangsschnittstelle
- 12: Ausgangsschnittstelle
- 13: Steuerung
- 14: Blendeneinrichtung
- 15: Arbeitszelleneinhausung
- 16: Überwachungsanordnung
- 17: Notauseinrichtung

## Patentansprüche

1. Überwachungsanordnung (16) für eine Laseranlage (1) zur Umsetzung eines Laserbearbeitungsprozesses,
- mit einer Auswerteeinrichtung (10), und
- mit einer Sensoreinrichtung (9), welche mit ihrem Erfassungsbereich auf den Laserbearbeitungsprozess gerichtet ist und ausgebildet ist, Prozess-Lichtemissionen in Form von Prozessemissionen des Laserbearbeitungsprozesses hinsichtlich der Wellenlänge aufnehmen zu können,
wobei die Auswerteeinrichtung (10)
- eine Eingangsschnittstelle (11) zur Übernahme von mindestens einem Sensorsignal aufweist,
wobei das Sensorsignal durch die Sensoreinrichtung (9) aufgenommen ist,
wobei das Sensorsignal die Prozess-Lichtemission des Laserbearbeitungsprozesses ausgehend von einem Plasma beschreibt,
- sowie eine Ausgangsschnittstelle (12) zur Ausgabe eines Notsignals in Form eines Steuersignals zur Einleitung einer, zu einer Deaktivierung des Laserstrahls in dem Laserbearbeitungsprozess führenden, Notreaktion für die Laseranlage (1) aufweist,
**dadurch gekennzeichnet, dass**
die Auswerteeinrichtung (10) ausgebildet ist, das Sensorsignal auf Abweichungen der Prozess-Lichtemission in dem Laserbearbeitungsprozess in Form sowohl einer Abschwächung der Prozess-Lichtemission als auch eines Ausfalls der Prozess-Lichtemission als auch einer Änderung der Spektralverteilung der erfassten Prozess-Lichtemission zu untersuchen und zu überwachen, wobei durch die Detektion der Prozess-Lichtemissionen detektiert werden kann, ob der Laserstrahl bestimmungsgemäß das Werkstück trifft oder ob der Laserstrahl aufgrund einer Störung nicht bestimmungsgemäß auf das Werkstück geleitet wird, und bei Detektion einer Abweichung, wenn der Laserstrahl aufgrund der Störung nicht bestimmungsgemäß auf das Werkstück geleitet wird, das Notsignal auszugeben, wobei das Sensorsignal ein Spektrum und/oder eine Intensität eines Plasmas bei dem Laserbearbeitungsprozess beschreibt.

2. Überwachungsanordnung (16) nach einem der vorhergehenden Ansprüche, **gekennzeichnet durch** eine Blendeneinrichtung (14) zur Integration in die Laseranlage (1) für eine Abblendung eines Laserstrahls (4), wobei die Blendeneinrichtung (14) mit der Auswerteeinrichtung (10) signaltechnisch verbunden ist und wobei durch das Notsignal die Blendeneinrichtung (14) angesteuert wird, um den Laserstrahl (4) abzublenden.

3. Laseranlage (1) zur Umsetzung eines Laserbearbeitungsprozesses, **gekennzeichnet durch** eine Überwachungsanordnung (16) nach einem der vorhergehenden Ansprüche.

4. Laseranlage (1) nach Anspruch 3, **gekennzeichnet durch** eine Notauseinrichtung (17), wobei die Notauseinrichtung (17) mit der Auswerteeinrichtung (10) signaltechnisch verbunden ist und wobei durch das Notsignal die Notauseinrichtung (17) angesteuert wird, von einem Betriebszustand in einen Notauszustand zu wechseln.

5. Laseranlage (1) nach Anspruch 4, **dadurch gekennzeichnet, dass** die Notauseinrichtung (17) manuell aus dem Notauszustand in den Betriebszustand versetzt werden muss.

6. Laseranlage (1) nach einem der Ansprüche 3 bis 5, **gekennzeichnet durch** die Sensoreinrichtung (9) zur Aufnahme der Lichtemission des Laserbearbeitungsprozesses und zur Ausgabe des Sensorsignals an die Auswerteeinrichtung, wobei die Sensoreinrichtung (9) eine Erfassungsrichtung aufweist, wobei die Erfassungsrichtung koaxial zu dem Laserstrahl (4) ausgerichtet ist.

7. Laseranlage (1) nach einem der Ansprüche 3 bis 6, **gekennzeichnet durch** eine Arbeitszelleneinhausung (15) zur Umgebung des Laserbearbeitungsprozesses, wobei die Arbeitszelleneinhausung (15) als eine Leichteinhausung ohne oder mit verringerter Laserschutzfunktion ausgebildet ist.

## Claims

1. A monitoring arrangement (16) for a laser system (1) for implementing a laser machining process,
- having an evaluation device (10), and
- having a sensor device (9) the sensing area of which is directed towards the laser machining process and which is configured to be able to receive process light emissions in the form of process emissions of the laser machining process with respect to the wavelength, wherein the evaluation device (10)
- has an input interface (11) for accepting at least one sensor signal,
wherein the sensor signal is received by the sensor device (9),
wherein the sensor signal describes the process light emission of the laser machining process starting from a plasma,
- and has an output interface (12) for outputting an emergency signal in the form of a control signal for initiating an emergency reaction for the laser system (1), which leads to a deactivation of the laser beam in the laser machining process,
**characterized in that**
the evaluation device (10) is configured to examine and to monitor the sensor signal for deviations of the process light emission in the laser machining process in the form of both a weakening of the process light emission and a failure of the process light emission as well as a change in the spectral distribution of the sensed process light emission, wherein it can be detected, by the detection of the process light emissions, whether the laser beam strikes the workpiece as intended or whether the laser beam is not conducted onto the workpiece as intended due to a disturbance, and, in the event of a deviation being detected, if the laser beam is not conducted onto the workpiece as intended due to the disturbance, to output the emergency signal, wherein the sensor signal describes a spectrum and/or an intensity of a plasma during the laser machining process.

2. The monitoring arrangement (16) according to any one of the preceding claims, **characterized by** a diaphragm device (14) for integration into the laser system (1) for dimming a laser beam (4), wherein the diaphragm device (14) is connected for signaling purposes to the evaluation device (10) and wherein the diaphragm device (14) is actuated by the emergency signal in order to dim the laser beam (4).

3. A laser system (1) for implementing a laser machining process, **characterized by** a monitoring arrangement (16) according to any one of the preceding claims.

4. The laser system (1) according to Claim 3, **characterized by** an emergency stop device (17), wherein the emergency stop device (17) is connected for signaling purposes to the evaluation device (10) and wherein the emergency stop device (17) is actuated by the emergency signal to switch from an operating state into an emergency stop state.

5. The laser system (1) according to Claim 4, **characterized in that** the emergency stop device (17) has to be manually switched from the emergency stop state into the operating state.

6. The laser system (1) according to any one of Claims 3 to 5, **characterized by** the sensor device (9) for receiving the light emission of the laser machining process and for outputting the sensor signal to the evaluation device, wherein the sensor device (9) has a sensing direction, wherein the sensing direction is aligned coaxially with the laser beam (4).

7. The laser system (1) according to any one of Claims 3 to 6, **characterized by** a working cell housing (15) for encompassing the laser machining process, wherein the working cell housing (15) is configured as a light housing with no laser protection function or with a reduced laser protection function.

## Revendications

1. Agencement de surveillance (16) pour une installation laser (1) destinée à la mise en œuvre d'un processus d'usinage au laser,
- avec un dispositif d'évaluation (10), et
- avec un dispositif de capteur (9), qui est orienté avec sa zone d'acquisition vers le processus d'usinage au laser et qui est réalisé pour pouvoir recevoir des émissions lumineuses de processus sous forme d'émissions de processus du processus d'usinage au laser en termes de longueur d'onde,
le dispositif d'évaluation (10)
- présentant une interface d'entrée (11) pour la prise en charge d'au moins un signal de capteur,
le signal de capteur étant reçu par le dispositif de capteur (9),
le signal de capteur décrivant l'émission lumineuse de processus du processus d'usinage au laser à partir d'un plasma,
- ainsi qu'une interface de sortie (12) pour émettre un signal d'urgence sous la forme d'un signal de commande afin de déclencher une réaction d'urgence pour l'installation laser (1) conduisant à une désactivation du faisceau laser dans le processus d'usinage au laser, **caractérisé en ce que**
le dispositif d'évaluation (10) est réalisé pour examiner et surveiller le signal de capteur afin de détecter des écarts dans l'émission lumineuse de processus du processus d'usinage au laser sous la forme aussi bien d'un affaiblissement de l'émission lumineuse de processus que d'une défaillance de l'émission lumineuse de processus ou d'une modification de la distribution spectrale de l'émission lumineuse de processus acquise, la détection des émissions lumineuses de processus permettant de détecter si le faisceau laser frappe la pièce à usiner de manière conforme ou si le faisceau laser n'est pas dirigé vers la pièce à usiner de manière conforme en raison d'une perturbation, et en cas de détection d'un écart, lorsque le faisceau laser n'est pas dirigé vers la pièce à usiner de manière conforme en raison de la perturbation, pour émettre le signal d'urgence, le signal de capteur décrivant un spectre et/ou une intensité d'un plasma dans le processus d'usinage au laser.

2. Agencement de surveillance (16) selon l'une quelconque des revendications précédentes, **caractérisé par** un dispositif de diaphragme (14) destiné à être intégré dans l'installation laser (1) pour atténuer un faisceau laser (4), le dispositif de diaphragme (14) étant relié au dispositif d'évaluation (10) par signalisation et le signal d'urgence commandant le dispositif de diaphragme (14) afin d'atténuer le faisceau laser (4).

3. Installation laser (1) pour la mise en œuvre d'un processus d'usinage au laser, **caractérisée par** un agencement de surveillance (16) selon l'une quelconque des revendications précédentes.

4. Installation laser (1) selon la revendication 3, **caractérisée par** un dispositif d'arrêt d'urgence (17), le dispositif d'arrêt d'urgence (17) étant relié au dispositif d'évaluation (10) par signalisation et le signal d'urgence commandant le dispositif d'arrêt d'urgence (17) pour passer d'un état de fonctionnement à un état d'arrêt d'urgence.

5. Installation laser (1) selon la revendication 4, **caractérisée en ce que** le dispositif d'arrêt d'urgence (17) doit être commuté manuellement de l'état d'arrêt d'urgence à l'état de fonctionnement.

6. Installation laser (1) selon l'une quelconque des revendications 3 à 5, **caractérisée par** le dispositif de capteur (9) destiné à recevoir l'émission lumineuse du processus d'usinage au laser et à émettre le signal de capteur au dispositif d'évaluation, le dispositif de capteur (9) présentant une direction d'acquisition, la direction d'acquisition étant orientée de manière coaxiale par rapport au faisceau laser (4).

7. Installation laser (1) selon l'une quelconque des revendications 3 à 6, **caractérisée par** une enceinte de cellule de travail (15) pour l'environnement du processus d'usinage au laser, l'enceinte de cellule de travail (15) étant réalisée sous forme d'enceinte légère sans fonction de protection laser ou avec une fonction de protection laser réduite.
